# FASCICULE DE BREVET EUROPEEN

(11) **EP 2 877 911 B1**
(45) Date de publication et mention de la délivrance du brevet: **05.09.2018**
(21) Numéro de dépôt: 13745033.4
(22) Date de dépôt: 28.07.2013
(51) Int. Cl.: G06F 3/041, G06F 3/044, B82Y 30/00, B82Y 10/00, B82Y 15/00, G01L 1/18

(54) **PROCÉDÉ POUR LA FABRICATION D'UNE SURFACE TACTILE TRANSPARENTE ET SURFACE TACTILE OBTENUE PAR UN TEL PROCÉDÉ**
VERFAHREN ZUR HERSTELLUNG EINES TRANSPARENTEN TAKTILEN OBERFLÄCHE UND DURCH DIESES VERFAHREN ERHALTENE TAKTILE OBERFLÄCHE
METHOD OF MANUFACTURING A TRANSPARENT TACTILE SURFACE AND TACTILE SURFACE OBTAINED BY SUCH A METHOD

(30) Priorité: 27.07.2012 FR 1257340
(43) Date de publication de la demande: 03.06.2015
(73) Titulaire: Nanomade Concept, 31100 Toulouse (FR)
(72) Inventeur: SEVERAC, Fabrice, F-31300 Toulouse (FR); CHRISTOPHE, Céline, F-31190 Auterive (FR); POURCIEL-GOUZY, Marie-Laure, F-31460 Toutens (FR)
(74) Mandataire: Ipside
(86) Numéro de dépôt international: PCT/EP2013/065857
(87) Numéro de publication internationale: WO 2014/016429

(56) Documents cités:
- WO-A1-96/07487
- CN-B- 101 054 267
- US-A1- 2011 227 836
- N. AL-DAHOUDI ET AL: "Wet coating deposition of ITO coatings on plastic substrates", JOURNAL OF SOL-GEL SCIENCE AND TECHNOLOGY, vol. 26, no. 1/3, 1 janvier 2003 (2003-01-01), pages 693-697, XP055062350, ISSN: 0928-0707, DOI: 10.1023/A:1020777500940
- GOEBBERT C ET AL: "Wet chemical deposition of ATO and ITO coatings using crystalline nanoparticles redispersable in solutions", THIN SOLID FILMS, ELSEVIER-SEQUOIA S.A. LAUSANNE, CH, vol. 351, no. 1-2, 30 août 1999 (1999-08-30), pages 79-84, XP004183070, ISSN: 0040-6090, DOI: 10.1016/S0040-6090(99)00209-6

## Description

L'invention concerne un procédé pour la fabrication d'une surface tactile transparente et une surface tactile obtenue par un tel procédé. Le procédé objet de l'invention est plus particulièrement, mais non exclusivement, adapté à la fabrication d'un écran tactile, souple ou rigide, destiné notamment à un appareil électronique tel qu'un ordinateur, une tablette informatique ou un téléphone. Le procédé objet de l'invention est également adapté à la réalisation d'une vitre ou d'une paroi transparente fonctionnalisée. Dans tout le texte, les termes « transparent » ou « translucide » sont considérés comme des équivalents.

Le document US 5 915 285 décrit un procédé pour la réalisation d'un dispositif de mesure de la déformation d'une surface transparente. Ce procédé de l'art antérieur repose sur la propriété piézo-résistive de l'oxyde d'indium-étain (In₂O₃-SnO₂₎ ou ITO, une matière transparente, laquelle matière est déposée sous la forme d'une couche mince de revêtement sur un substrat constituant la surface à fonctionnaliser. Lorsque ledit substrat est déformé, la couche mince d'ITO subit cette déformation et sa résistivité est modifiée. Ainsi, en mesurant la variation de résistivité de ladite couche, la déformation du substrat peut être détectée. L'effet piézo-résistif de la couche d'ITO est mesurable mais correspond à de faibles variations de résistivité. Cette variation de résistivité en fonction de la déformation définit un gain, couramment désigné sous le terme de « facteur de jauge ». Ainsi, le facteur de jauge d'un capteur de déformation fondé sur l'effet piézo-résistif de l'ITO est faible, et une détection précise du mode de déformation du substrat nécessite la mise en oeuvre de techniques de mesure et de matériels dont le coût n'est pas compatible avec celui des appareils destinés au grand public.

Le document WO 2012 016945 au nom de la demanderesse, décrit la réalisation d'une surface tactile au moyen de nanoparticules conductrices déposées sous la forme d'une assemblée de nanoparticules en suspension colloïdale sur ladite surface, notamment par une méthode de dépôt capillaire/convectif. La variation de conductivité de l'assemblée de nanoparticules sous l'effet d'une déformation, variation attribuée à la conduction par effet tunnel entre les nanoparticules de l'assemblée sans être lié par une quelconque théorie, permet l'obtention d'un facteur de jauge pour le capteur de déformation ainsi constitué, beaucoup plus important que ce qu'il est possible d'obtenir par l'effet piézo-résistif. Toutefois, l'obtention d'un tel capteur de déformation à partir de nanoparticules d'ITO, ou d'autres nanoparticules transparentes disponibles commercialement, ne fournit pas de résultats satisfaisants. D'une part, la conductivité électrique des nanoparticules d'ITO est trop faible pour faire apparaître le mécanisme de conduction par effet tunnel visé par ce type de jauge. D'autre part, les nanoparticules d'ITO sont disponibles commercialement sous la forme de nanopoudre, dans laquelle, la taille des nanoparticules est très dispersée. La demanderesse a identifié que le facteur de jauge obtenu pour un capteur de déformation tel que décrit dans le document WO 2012 016945 est directement lié à l'homogénéité de taille des nanoparticules qu'il contient. Par ailleurs, l'introduction de la nanopoudre dans une phase liquide afin de constituer la suspension colloïdale conduit à la formation d'amas de nanoparticules, lesquels amas augmentent encore la dispersion de taille des nanoparticules de l'assemblée. Finalement, la technique du dépôt capillaire/convectif bien adaptée industriellement, nécessite, elle aussi, une suspension de nanoparticules homogènes en taille et suffisamment petites. À titre d'exemple, les capteurs décrits dans le document WO 2012 016945 sont réalisés à partir de nanoparticules d'or monodispersées, d'un diamètre moyen de 15 nm (15.10⁻⁹ mètre), ce type de solution colloïdale étant couramment disponible dans le commerce.

**[Les documents** N. AL-DAHOUDI ET AL: « Wet coating déposition of ITO coatings on plastic substrates », JOURNAL OF SOL-GEL SCIENCE AND TECHNOLOGY, vol. 26, n°. 1/3, 1 janvier 2003 (2003-01-01**) et** US 2011/227836 **décrivent des procédés pour la fabrication d'une surface tactile transparente, dans lequels une suspension de nanoparticules d'ITO dans un solvant organique est préparée, et où un liant polymérique, apte à se greffer à la surface des nanoparticules, est ajouté à la suspension sous agitation forte. La suspension obtenue est utilisée pour déposer une couche de nanoparticules sur un substrat transparent.]**

L'invention vise à résoudre les inconvénients de l'art antérieur et concerne à cette fin un procédé pour la fabrication d'une surface tactile transparente selon revendication 1.

Ainsi, les ultrasons permettent de briser les agrégats de nanoparticules tout en permettant à l'agent stabilisant de s'adsorber de manière non spécifique aux nanoparticules ainsi dispersées. Le ligand se greffant aux nanoparticules de manière covalente, c'est la structure chimique de la molécule de ligand qui est responsable de la conduction par effet tunnel entre les nanoparticules et qui permet la réalisation d'une jauge de déformation à partir de nanoparticules faiblement conductrices. Cette liaison covalente entre le ligand et la surface des nanoparticules, plus forte que la liaison par adsorption de l'agent stabilisateur, permet de fonctionnaliser la surface des nanoparticules en suspension par incubation, le ligand prenant la place de l'agent stabilisant. Ainsi, les nanoparticules, dont la modification de surface les rend aptes à produire un effet tunnel, ou tout autre effet de conduction adapté pour produire un facteur de jauge élevé, sont stables et dispersée dans la solution et leur dépôt à la surface du substrat peut être contrôlé selon divers procédés, notamment un procédé de dépôt capillaire/convectif.

Le terme « adsorption » correspond à la fixation de molécules libres d'une substance à la surface d'un corps.

L'invention est avantageusement mise en oeuvre selon les modes de réalisation exposés ci-après, lesquels sont à considérer individuellement ou selon toute combinaison techniquement opérante.

Avantageusement, le procédé objet de l'invention comprend entre les étapes b) et c) les étapes consistant à :
e. décanter la solution aqueuse ;
f. séparer et retirer les agrégats de nanoparticules de taille trop importante de ladite solution.

Cette variante du procédé permet d'obtenir une répartition encore plus homogène des nanoparticules dans la solution aqueuse.

Selon un mode de réalisation avantageux, l'agent stabilisant est du monolaurate de polyoxyéthylène sorbitane.

Le ligand est de type apte à la création de liaisons métal-O-P avec la surface des nanoparticules, préférentiellement un acide (aminométhyl) phosphonique.(CH₆NO₃P). En effet, l'acide phosphonique possède une très forte affinité notamment avec les particules d'ITO, de plus, il favorise la dispersion des nanoparticules améliorant la stabilité de la solution lors du dépôt capillaire/convectif.

Selon un exemple de réalisation du procédé objet de l'invention, la suspension colloïdale obtenue à l'étape f), comprend des agrégats de nanoparticules dont le diamètre est contrôlé. Ainsi, le procédé objet de l'invention utilise avantageusement des agrégats de nanoparticules, mais de taille homogène, afin de réaliser le procédé de manière économique, mais aussi d'obtenir un facteur de jauge plus élevé.

Avantageusement, le diamètre moyen des agrégats est de l'ordre de 100 nm (100.10⁻⁹ mètre). Cette dimension d'agrégat permet de réaliser la suspension colloïdale de manière économique tout en conservant la capacité de dépôt capillaire/convectif de ladite suspension.

Le procédé objet de l'invention comprend, avant l'étape d), une étape consistant à :
g. modifier la surface du substrat par le greffage d'un coupleur chimique sur ladite surface.

Ainsi, le coupleur réalise un accrochage fort de l'assemblée de nanoparticules au substrat, pour permettre la mise en oeuvre d'étapes technologiques ultérieures et assurer la résistance de cet assemblage à l'humidité.

Selon une variante de réalisation particulière du mode de réalisation précédent, le coupleur chimique déposé sur la surface du substrat au cours de l'étape g) est déposé selon un motif géométrique défini. Ainsi, l'assemblée de nanoparticules déposée sur le substrat est structurée selon le motif visé par un simple rinçage.

Le procédé objet de l'invention comprend, après l'étape d), selon le mode de réalisation comportant le greffage d'un coupleur à la surface du substrat, une étape consistant à :
h. créer une couche de passivation au-dessus de l'assemblée de nanoparticules déposée à l'étape d).

Ainsi, la sensibilité du dispositif à l'humidité extérieure et à ces variations d'humidité est réduite. La couche de passivation assure également l'isolation électrique de l'assemblée de nanoparticules.

Avantageusement, la couche de passivation est constituée de dioxyde de silicium (SiO2). Cette couche de passivation, dure, permet de protéger de l'abrasion la surface tactile obtenue par le procédé objet de l'invention.

Alternativement, la couche de passivation est constituée de nitrure de silicium (Si₃N₄).

Selon une variante de réalisation alternative, la couche de passivation est constituée d'un polyimide. Ce mode de réalisation permet de réaliser une surface tactile souple.

Avantageusement, le procédé objet de l'invention comprend, dans sa version comportant le greffage d'un coupleur sur la surface du substrat et avant l'étape h) une étape consistant à :
i. créer sur l'assemblée de nanoparticules un réseau d'électrodes.

Ainsi, des dispositifs de connexion différents sont applicables sur une même assemblée de nanoparticules de sorte à obtenir des mesures de déformations ou de contraintes différentes.

Selon un premier mode de réalisation de l'étape d) du procédé objet de l'invention, la suspension colloïdale est déposée sur la surface du substrat au cours de ladite étape d) par un procédé de dépôt capillaire/convectif. Ce procédé est bien maîtrisé industriellement et la préparation de la suspension colloïdale selon le procédé objet de l'invention permet de bien le contrôler pour assurer la qualité du résultat obtenu.

Selon un deuxième mode de réalisation de l'étape d) du procédé objet de l'invention, le dépôt de la suspension colloïdale au cours de ladite étape d) est réalisé par immersion du substrat dans ladite suspension et le procédé comprend après l'étape d) une étape consistant à :
j. rincer le substrat avec un solvant apte à éliminer les nanoparticules qui ne sont pas accrochées par le coupleur chimique.

Ce mode de réalisation permet d'atteindre des productivités élevées.

Selon un troisième mode de réalisation de l'étape d) du procédé objet de l'invention, ladite étape d) comprend les étapes consistant à :
di. déposer une goutte d'une suspension colloïdale comprenant des nanoparticules sur la surface du substrat ;
dii. évaporer ladite goutte.

Ce mode de réalisation présente un compromis entre productivité et quantité de nanoparticules utilisées pour la réalisation de l'étape d). De plus, ce mode de réalisation est moins sensible à la taille des nanoparticules dans la suspension colloïdale que la technique du dépôt capillaire/convectif et s'avère particulièrement adapté au dépôt d'une telle suspension comprenant des nanoparticules d'ITO, notamment sous la forme d'agrégats.

Avantageusement, l'étape d'évaporation de la goutte est réalisée en chauffant le substrat. Ainsi, le processus de dépôt est encore accéléré.

L'invention concerne également une surface tactile transparente, laquelle surface comporte une jauge de déformation comportant une assemblée de nanoparticules, laquelle jauge est obtenue par le procédé objet de l'invention. Ainsi, ladite surface tactile, permet de mesurer une force qui lui est appliquée ou une déformation qui lui est imposée.

Selon un mode de réalisation de la surface tactile objet de l'invention, celle-ci comprend un substrat constitué de poly(téréphtalate) d'éthylène. Ce mode de réalisation est adapté à une surface tactile souple.

Selon un autre mode de réalisation, la surface tactile objet de l'invention comprend un substrat constitué de dioxyde de silicium. Ce mode de réalisation est adapté à une surface tactile rigide.

Avantageusement, la surface tactile objet de l'invention comporte un réseau d'électrodes comprenant deux ensembles d'électrodes en peigne imbriqués. Ainsi, pour un même motif de dépôt de l'assemblée nanoparticules sur le substrat et un même nombre d'électrodes déposées, un plus grand nombre de jauges élémentaires peut être créé.

L'invention est exposée ci-après selon ses modes de réalisation préférés, nullement limitatifs, et en référence aux figures 1 à 7, dans lesquelles :
- la figure 1 montre un logigramme de la préparation d'une solution aqueuse comprenant une dispersion de nanoparticules, adaptée à un dépôt capillaire/convectif, à partir d'une nanopoudre, selon le procédé objet de l'invention ;
- a figure 2 représente un logigramme de la préparation d'un substrat et du dépôt sur ledit substrat d'une assemblée de nanoparticules selon le procédé objet de l'invention ;
- la figure 3 montre selon une vue en perspective un exemple de réalisation d'une surface tactile selon l'invention ;
- la figure 4 est une vue de détail, en vue de dessus, d'un capteur de la surface tactile de la figure 3, ledit capteur comportant une assemblée de nanoparticules ;
- la figure 5 montre, selon une vue de dessus, un exemple de réalisation d'un capteur de la surface tactile, lequel capteur comporte un réseau d'électrodes en peigne ;
- la figure 6 est un exemple d'évolution de la résistance d'un capteur de déformation réalisé selon le procédé objet de l'invention, en fonction de la déformation imposée audit capteur ;
- et la figure 7 est un synopsis d'un procédé de dépôt de la suspension colloïdale sur le substrat par l'intermédiaire de l'évaporation d'une goutte, selon une vue en coupe.

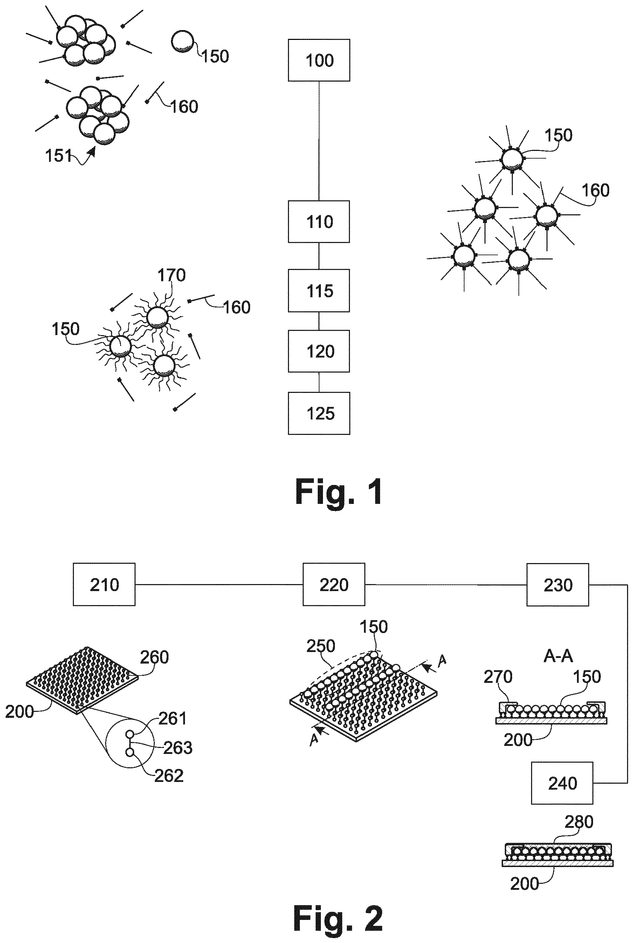

Figure 1, selon un exemple de mise en oeuvre du procédé objet de l'invention relative à la préparation de la dispersion aqueuse, ledit procédé comprend une première étape (100) consistant à incorporer, dans une solution aqueuse comprenant un agent stabilisant (160), des nanoparticules (150), sous la forme d'une nanopoudre. Lesdites nanoparticules sont constituées d'une matière transparente ou translucide. À titre d'exemples non limitatifs, lesdites particules sont constituées d'oxyde de zinc (ZnO) ou d'oxyde d'indium dopé à l'étain (In₂O₃- SnO₂), ou ITO. La nanopoudre comprend des agrégats (151) de nanoparticules. Selon un exemple de réalisation, l'agent stabilisant est du monolaurate de polyoxyéthylène sorbitane, disponible sous l'appellation commerciale « *Tween-20* ». Au cours d'une étape (110) d'homogénéisation, la solution aqueuse dans laquelle la nanopoudre a été incorporée lors de l'étape précédente (100), est soumise à une agitation par ultrasons, à une puissance suffisante pour briser les agrégats de nanoparticules, permettant ainsi aux molécules (160) de l'agent de stabilisation de s'adsorber de manière non spécifique aux nanoparticules ainsi dispersées. Une phase optionnelle (115) de décantation permet de séparer de la sédimentation, les agrégats dont la taille est trop importante. Ainsi, la solution aqueuse comprend une dispersion d'agrégats de nanoparticules de taille homogène de l'ordre de 100 nm (100.10⁻⁹ mètre). Au cours d'une étape (120) de fonctionnalisation, un ligand est mélangé à la solution aqueuse qui est incubée pendant un temps de l'ordre de 12 heures à température ambiante, ces paramètres étant ajustés selon la nature du ligand. Selon un mode de réalisation préféré, le ligand est un acide (aminométhyl)phosphonique. Dans ces conditions, le ligand (170), en forte interaction avec les nanoparticules (150), se greffe à celles-ci de manière covalente, prenant la place des molécules de l'agent stabilisateur (160) qui n'est lié que par adsorption auxdites nanoparticules. L'agent stabilisateur est éliminé de la solution aqueuse au cours d'une étape (125) de rinçage, consistant en une série de rinçages à l'eau. La solution aqueuse est ainsi prête pour être déposée par dépôt capillaire/convectif ou par d'autres méthodes.

Figure 2, parallèlement à la préparation de la solution aqueuse pour le dépôt, la surface du substrat destinée à recevoir le dépôt de l'assemblée de nanoparticules est préparée. Au cours d'une étape de greffe (210), un coupleur (260) est greffé à la surface du substrat (200). Ledit substrat est constitué d'un matériau transparent ou translucide. À titre d'exemple non limitatif, le substrat est constitué de poly(téréphtalate) d'éthylène, ou PET, afin de constituer une surface tactile souple. Selon un autre exemple de réalisation, le substrat (200) est constitué de dioxyde de silicium (SiO₂), afin de constituer une surface tactile rigide. Selon encore un autre exemple de réalisation, le substrat souple est collé sur un support rigide. Le coupleur (260) consiste en une molécule composée d'une chaîne de liaison (263), par exemple une chaîne carbonée, et de deux fonctions chimiques distinctes (261, 262) aux extrémités de la chaîne de liaison. Une des deux fonctions chimique sert à greffer le coupleur (260) sur la surface du substrat (200), l'autre à greffer ledit coupleur sur la surface des nanoparticules.

À titre d'exemple non limitatif, le coupleur chimique pour un substrat SiO2 ou PET est un silane (SiH₄), apte à interagir avec des groupements OH de la surface du substrat préalablement activée par un traitement UV-Ozone et comportant à l'autre extrémité (261) du coupleur un groupement carboxylique (COOH) apte à se greffer sur un groupe amine (NH₂) préalablement greffé à la surface des nanoparticules.

L'opération de greffe (210) dudit coupleur (260) à la surface du substrat, est par exemple réalisée par immersion. Selon un mode de réalisation particulier, le coupleur est greffé à la surface du substrat, par un procédé de micro-impression tel que la lithographie douce, afin de déposer ledit coupleur selon un motif défini.

Au cours d'une étape de dépôt (220), l'assemblée de nanoparticules (150) en suspension colloïdale est déposée sur la surface du substrat greffée par le coupleur. Selon un exemple de réalisation, le dépôt est réalisé par une technique de dépôt capillaire/convectif selon un motif géométrique déterminé, par exemple sous la forme de fils de nanoparticules (250). Selon un mode de réalisation du procédé objet de l'invention, ce motif est obtenu par le contrôle des paramètres de dépôt convectif. Selon un autre mode de réalisation, le motif de dépôt de l'assemblée de nanoparticules est la reproduction du motif de greffe du coupleur. En effet, le coupleur colle de manière irréversible les nanoparticules sur la surface du substrat. Ainsi, par immersion du substrat dans la suspension colloïdale, les nanoparticules sont collées selon le motif correspondant au motif de micro-impression du coupleur sur la surface du substrat. Les nanoparticules se trouvant en dehors des motifs du coupleur sont éliminées de la surface par rinçage. Ainsi, ce mode de réalisation permet l'obtention d'une assemblée de nanoparticules, organisée selon un motif, par un procédé de dépôt de ladite assemblée par immersion.

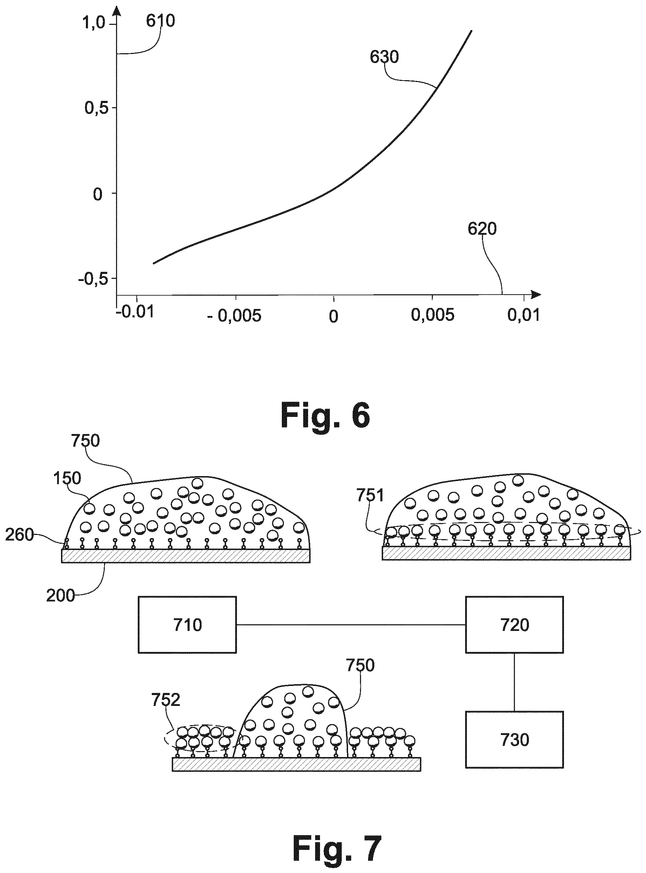

Figure 7, selon un autre mode de réalisation, l'assemblée de nanoparticules est déposée en suspension colloïdale à la surface du substrat sous la forme d'une goutte. Ainsi, selon une première étape (710) de ce procédé, une goutte (750) comprenant des nanoparticules (150) en suspension colloïdale est déposée à la surface du substrat (200) laquelle surface a préalablement été greffée par un coupleur (260) chimique. Du fait de l'affinité chimique des nanoparticules avec le coupleur chimique, naturellement, selon une deuxième étape (720) de ce procédé, une monocouche (751) de nanoparticules se greffe sur les coupleurs chimiques à la surface du substrat. Au cours d'une étape d'évaporation (730), l'évaporation de la goutte par son centre engendre un mouvement des bords de ladite goutte vers son centre, provoquant un dépôt de nanoparticules. Ce dépôt s'organise (752) sur la première monocouche (751) qui reste attachée au substrat par le coupleur chimique. Cette technique permet de réaliser des dépôts de structure comparable à ce qu'il est possible d'obtenir par dépôt capillaire/convectif tout en bénéficiant d'une productivité plus élevée, elle permet également réduire la quantité de nanoparticules déposées en suspension pour un même résultat, toutes les nanoparticules (150) contenues dans la goutte (750) étant utilisées. Ainsi, le temps de dépôt est réduit à quelques minutes contre quelques heures selon le procédé de dépôt capillaire/convectif de l'art antérieur et la quantité de nanoparticules utilisée est réduite d'un facteur 10, à fonctionnalité équivalente, en comparaison des techniques de dépôt de l'art antérieur. Ce procédé est par ailleurs compatible avec les procédés de micro-impression existants. De plus, ce procédé de dépôt est beaucoup moins sensible à la taille des nanoparticules et s'avère particulièrement adapté au dépôt d'une suspension colloïdale comprenant des agrégats de nanoparticules. Selon un exemple de réalisation (non représenté) des moyens adaptés sont utilisés pour chauffer le substrat (200) après que la goutte (750) ait été déposée sur ledit substrat de sorte à accélérer l'évaporation de ladite goutte (750).

En revenant à la figure 2, au cours d'une étape (230) de création du circuit, des électrodes (270), pour la connexion électrique de l'assemblée de nanoparticules, sont réalisées par des techniques de lithographie. À titre d'exemple, les électrodes transparentes sont constituées par un dépôt d'ITO, déposé par photolithographie ou par lithographie douce.

Au cours d'une étape (240) de passivation, une couche (280) de passivation est déposée sur l'ensemble. Cette couche transparente, de nature organique ou céramique, protège l'assemblée de nanoparticules et le dispositif mettant en oeuvre cette assemblée de nanoparticules des agressions extérieures. Ladite couche (280) de passivation est dimensionnée selon la matière la constituant, de sorte qu'elle permette la transmission des contraintes mécaniques à l'assemblée de nanoparticules. À titre d'exemples non limitatifs, la couche de passivation est constituée d'un polyimide, de dioxyde de silicium (SiO₂) ou de nitrure de silicium (Si₃N₄).

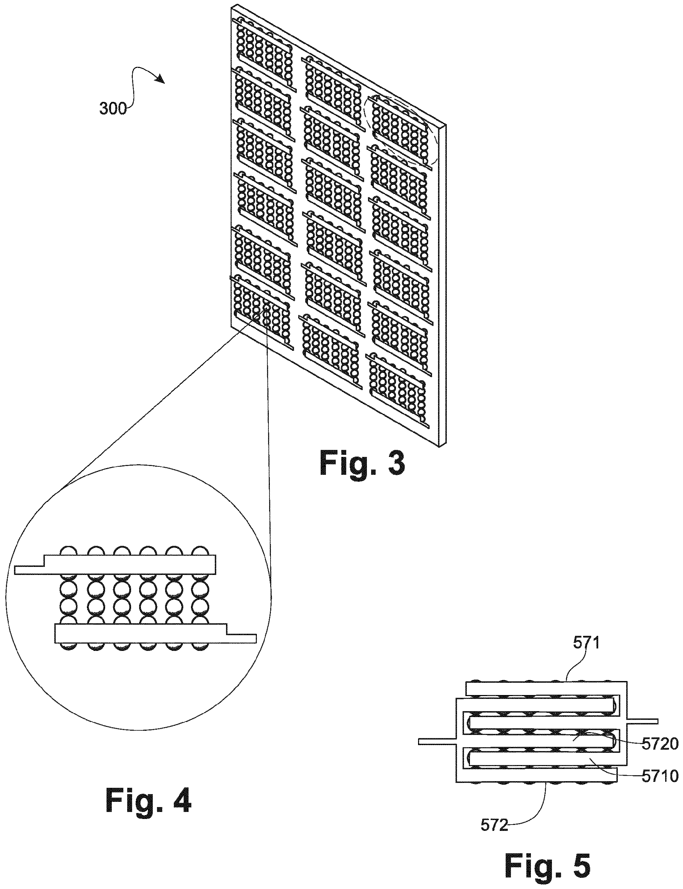

Figure 3, selon un exemple de réalisation, la surface tactile (300) objet de l'invention comporte une pluralité de capteurs (310) consistant en une pluralité d'assemblées de nanoparticules connectées par des électrodes selon un motif défini. Chaque capteur est obtenu par le procédé objet de l'invention et constitue un ensemble de jauges de déformation élémentaires apte à mesurer l'intensité et l'orientation d'une force appliquée sur ledit capteur.

Figure 4, selon l'exemple de réalisation de la surface tactile de la figure 3, chaque capteur (310) comprend une assemblée de nanoparticules (150) organisées selon un motif défini, par exemple des fils de nanoparticules, connectée par des électrodes (471, 472). Le motif d'arrangement des nanoparticules dans l'assemblée et le motif de connexion de ces arrangements par les électrodes (471, 472) coopèrent pour déterminer la sensibilité de chaque capteur à chaque composante du torseur d'effort qui lui est appliqué.

Figure 5, selon un exemple de réalisation de la surface tactile objet de l'invention, les électrodes d'un capteur (310) de ladite surface tactile sont organisées selon un réseau d'électrodes (571, 572) en peignes imbriqués, dits interdigités. Ce mode de réalisation permet, pour une même fonctionnalité de mesure et une même quantité de nanoparticules déposée sur le substrat, de réaliser un dispositif plus compact. Ainsi, selon cet exemple de réalisation, chaque dent (5710) d'un peigne (571) juxtaposée à une dent (5720) de l'autre peigne (572) défini entre lesdites dents une jauge élémentaire. Ladite jauge élémentaire est le siège d'une conduction électrique par effet tunnel entre les nanoparticules de l'assemblée situées entre les électrodes délimitant ladite jauge. Ce phénomène de conduction par effet tunnel est fonction de la nature chimique du ligand, et lorsque la liaison entre ligand et la surface des nanoparticules est de nature covalente, comme par exemple une liaison métal-O-P dans le cas d'un ligand à base d'acide phosphonique avec des nanoparticules d'ITO, alors, la longueur de la molécule de ligand a peu d'influence sur la conduction par effet tunnel entre les nanoparticules.

Figure 6, utilisation de la variation de la conduction par effet tunnel permet la réalisation d'une jauge de déformation très sensible. À titre d'exemple, le tracé (630) de la variation proportionnelle (ΔR/R0) de la résistance (610) d'une jauge élémentaire constituée d'une assemblée de nanoparticules d'ITO greffées d'un ligand à base d'acide phosphonique et obtenue par le procédé objet de l'invention, fait apparaître une évolution exponentielle de la réponse en fonction de déformation (620) subie par ladite jauge élémentaire. Selon cet exemple de réalisation le facteur de jauge atteint la valeur de 85 sur la plage de déformation explorée : de -1 %, en compression, à 1 % de déformation en traction pour une résistance R0 de 2430.10³ Ohm en l'absence de déformation.

La description ci-avant et les exemples de réalisation montrent que l'invention atteint les objectifs visés. En particulier, le procédé objet de l'invention permet la création d'une surface tactile transparente de manière économique par la mise en oeuvre de nanoparticules transparentes, notamment d'ITO, et d'un ligand spécifique pour obtenir des jauges élémentaires très sensibles. L'utilisation d'un coupleur chimique permet de déposer une telle jauge élémentaire sur tout type de surface, dure ou souple, et de protéger ce dépôt par une couche de passivation. D'autres variantes non représentées peuvent être mises en oeuvre, notamment, les électrodes peuvent être déposées sous l'assemblée de nanoparticules, entre ladite assemblée et le substrat.

## Revendications

1. Procédé pour la fabrication d'une surface tactile transparente,comportant les étapes consistant à :
a. incorporer (100) des nanoparticules (150) d'ITO dans une solution aqueuse comprenant un agent stabilisant (160) ;
b. soumettre (110) ladite solution aqueuse comprenant les nanoparticules aux ultrasons ;
c. incuber (120) les nanoparticules en suspension aqueuse avec un ligand apte à se greffer à la surface desdites nanoparticules par une liaison covalente de type métal-O-P avec la surface des nanoparticules ;
d. déposer (220) les nanoparticules dont la surface est modifiée par le ligand lors de l'étape c) sous la forme d'une suspension colloïdale sur le substrat (200) transparent ;
**caractérisé en ce qu'**il comprend avant l'étape d) une étape consistant à :
g. modifier la surface d'un substrat (200) transparent par le greffage d'un coupleur (260) chimique sur ladite surface ;
et **en ce qu'**il comprend après l'étape d) une étape consistant à :
h. créer au dessus de l'assemblée de nanoparticules déposée à l'étape d) une couche (280) de passivation.

2. Procédé selon la revendication 1, **caractérisé en ce qu'**il comprend entre les étapes b) et c) les étapes consistant à :
e. décanter (115) la suspension aqueuse ;
f. séparer et retirer les agrégats (151) de nanoparticules de taille trop importante de ladite suspension.

3. Procédé selon la revendication 1, **caractérisé en ce que** l'agent stabilisant est du monolaurate de polyoxyéthylène sorbitane.

4. Procédé selon la revendication 1 **caractérisé en ce que** le ligand est un acide (aminométhyl) phosphonique.

5. Procédé selon la revendication 2, **caractérisé en ce que** la suspension colloïdale obtenue à l'étape f) comprend des agrégats de nanoparticules de diamètre contrôlé

6. Procédé selon la revendication 5, **caractérisé en ce que** le diamètre moyen des agrégats est de l'ordre de 100 nm (100.10⁻⁹ mètre).

7. Procédé selon la revendication 1, **caractérisé en ce que** le coupleur (260) chimique déposé sur la surface du substrat (200) au cours de l'étape g) est déposé selon un motif géométrique défini.

8. Procédé selon la revendication 1, **caractérisé en ce que** la couche (280) de passivation est constituée de dioxyde de silicium (SiO₂).

9. Procédé selon la revendication 1 , **caractérisé en ce que** la couche (280) de passivation est constituée de nitrure de silicium (Si₃N₄).

10. Procédé selon la revendication 1 , **caractérisé en ce que** la couche (280) de passivation est constituée d'un polyimide

11. Procédé selon la revendication 1 , **caractérisé en ce qu'**il comprend avant l'étape h) une étape consistant à :
i. créer (230) sur l'assemblée de nanoparticules un réseau d'électrodes (271, 272)

12. Procédé selon la revendication 1, **caractérisé en ce que** la suspension colloïdale est déposée sur la surface du substrat au cours de l'étape d) par un procédé de dépôt capillaire/convectif

13. Procédé selon la revendication 7, **caractérisé en ce que** le dépôt de la suspension colloïdale au cours de l'étape d) est réalisé par immersion du substrat dans ladite suspension et qu'il comprend après l'étape d) une étape consistant à :
j. rincer le substrat (200) avec un solvant apte à éliminer les nanoparticules qui ne sont pas accrochées par le coupleur (260) chimique.

14. Procédé selon la revendication 7, **caractérisé en ce que** l'étape d) comprend les étapes consistant à :
di. déposer (710) une goutte (750) d'une suspension colloïdale comprenant des nanoparticules (150) sur la surface du substrat (200) ;
dii. évaporer (730) ladite goutte (750).

15. Procédé selon la revendication 14, **caractérisée en ce que** l'étape (730) d'évaporation est réalisée en chauffant le substrat (200).

16. Surface tactile (300) transparente, **caractérisée en ce qu'**elle comporte une jauge (310) de déformation comportant une assemblée de nanoparticules, obtenue par le procédé selon la revendication 1 .

17. Surface tactile (300) selon la revendication 16, **caractérisée en ce qu'**elle comprend un substrat constitué de poly(téréphtalate) d'éthylène.

18. Surface tactile (300) selon la revendication 16, **caractérisée en ce qu'**elle comprend un substrat constitué de dioxyde de silicium.

19. Surface tactile selon la revendication 16, obtenue par un procédé selon la revendication 12, **caractérisée en ce que** la jauge comporte un réseau d'électrodes comprenant deux ensembles d'électrodes (571, 572) en peigne dont les dents (5710, 5720) sont imbriquées.

## Patentansprüche

1. Verfahren für die Herstellung einer taktilen, transparenten Oberfläche, umfassend die Schritte, bestehend aus Folgendem:
a. Einarbeiten (100) von ITO-Nanopartikeln (150) in eine ein Stabilisierungsmittel (160) beinhaltende wässrige Lösung;
b. Unterwerfen (110) der wässrigen, die Nanopartikel beinhaltenden Lösung an Ultraschall;
c. Inkubieren (120) der Nanopartikel in wässriger Suspension mit einem Liganden, der geeignet ist, sich durch eine kovalente Bindung der Art Metall-O-P mit der Oberfläche der Nanopartikel an die Oberfläche der Nanopartikel zu pfropfen;
d. Abscheiden (220) der Nanopartikel, von denen die Oberfläche durch den Liganden des Schritts c) in der Form einer kolloidalen Suspension auf dem transparenten Substrat (200) modifiziert wird;
**dadurch gekennzeichnet, dass** es vor dem Schritt d) einen Schritt beinhaltet, bestehend aus:
g. Modifizieren der Oberfläche eines transparenten Substrats (200) durch das Pfropfen eines chemischen Kupplers (26) auf die Oberfläche;
und dadurch, dass es nach Schritt d) einen Schritt beinhaltet, bestehend aus:
h. Erzeugen einer Passivierungsschicht (280) über der in Schritt d) abgeschiedenen Nanopartikelanordnung.

2. Verfahren nach Anspruch 1, **dadurch gekennzeichnet, dass** es zwischen den Schritten b) und c) die Schritte beinhaltet, bestehend aus:
e. Dekantieren (115) der wässrigen Suspension;
f. Abtrennen und wegnehmen der zu großen Nanopartikelaggregate (115) von der Suspension.

3. Verfahren nach Anspruch 1, **dadurch gekennzeichnet, dass** das Stabilisierungsmittel Polyoxyethylensorbitanmonolaurat ist.

4. Verfahren nach Anspruch 1, **dadurch gekennzeichnet, dass** der Ligand eine Aminomethylphosphonsäure ist.

5. Verfahren nach Anspruch 2, **dadurch gekennzeichnet, dass** die in Schritt f) erhaltene kolloidale Suspension Nanopartikelaggregate mit kontrolliertem Durchmesser beinhaltet.

6. Verfahren nach Anspruch 5, **dadurch gekennzeichnet, dass** der mittlere Durchmesser der Aggregate in der Größenordnung von 100 nm (100.10⁻⁹ Meter) liegt.

7. Verfahren nach Anspruch 1, **dadurch gekennzeichnet, dass** der im Laufe des Schritts g) auf der Oberfläche des Substrats (200) abgeschiedene chemische Kuppler (260) entlang eines definierten geometrischen Motivs abgeschieden wird.

8. Verfahren nach Anspruch 1, **dadurch gekennzeichnet, dass** die Passivierungsschicht (280) aus Siliciumdioxid (SiO₂) besteht.

9. Verfahren nach Anspruch 1, **dadurch gekennzeichnet, dass** die Passivierungsschicht (280) aus Siliciumnitrid (Si₃N₄) besteht.

10. Verfahren nach Anspruch 1, **dadurch gekennzeichnet, dass** die Passivierungsschicht (280) aus einem Polyimid besteht.

11. Verfahren nach Anspruch 1, **dadurch gekennzeichnet, dass** es vor dem Schritt h) einen Schritt beinhaltet, bestehend aus:
i. Erzeugen (230) eines Elektrodennetzes (271, 272) auf der Nanopartikelanordnung.

12. Verfahren nach Anspruch 1, **dadurch gekennzeichnet, dass** im Laufe des Schritts d) die kolloidale Suspension durch eine kapillares/konvektives Abscheidungsverfahren auf der Oberfläche des Substrats abgeschieden wird.

13. Verfahren nach Anspruch 7, **dadurch gekennzeichnet, dass** die Abscheidung der kolloidalen Suspension im Laufe des Schritts d) durch Eintauchen des Substrats in die Suspension durchgeführt wird und dadurch, dass es nach dem Schritt d) einen Schritt beinhaltet, bestehend aus:
j. Abspülen des Substrats (200) mit einem Lösemittel, das zum Entfernen der Nanopartikel, die nicht durch den chemischen Kuppler (260) angebunden sind, geeignet ist.

14. Verfahren nach Anspruch 7, **dadurch gekennzeichnet, dass** der Schritt d) die Schritte beinhaltet, bestehend aus:
di. Abscheiden (710) eines Tropfens (750) einer kolloidalen, Nanopartikel (150) beinhaltenden Suspension auf die Oberfläche des Substrats (200);
dii. Verdampfen (730) des Tropfens (750).

15. Verfahren gemäß Anspruch 14, **dadurch gekennzeichnet, dass** der Schritt (730) des Verdampfens unter Erwärmung des Substrats (200) durchgeführt wird.

16. Taktile, transparente Oberfläche (300), **dadurch gekennzeichnet, dass** sie einen Dehnungsmessstreifen (310) umfasst, der eine durch das Verfahren nach Anspruch 1 erhaltene Nanopartikelanordnung umfasst.

17. Taktile Oberfläche (300) nach Anspruch 16, **dadurch gekennzeichnet, dass** sie ein aus Polyethylenterephthalat bestehendes Substrat beinhaltet.

18. Taktile Oberfläche (300) nach Anspruch 16, **dadurch gekennzeichnet, dass** sie ein aus Siliciumdioxid bestehendes Substrat beinhaltet.

19. Taktile Oberfläche nach Anspruch 16, erhalten durch ein Verfahren nach Anspruch 12, **dadurch gekennzeichnet, dass** der Messstreifen ein Elektrodennetz umfasst, beinhaltend zwei kammförmige Elektrodenbaugruppen (571, 572), von denen die Zähne (5710, 5720) verschachtelt sind.

## Claims

1. Method for the fabrication of a transparent touch surface comprising the steps consisting in:
a. incorporating (100) ITO nanoparticles (150) into an aqueous solution comprising a stabilising agent (160);
b. subjecting (110) to ultrasounds said aqueous solution comprising the nanoparticles;
c. incubating (120) the nanoparticles in aqueous suspension with a ligand capable of grafting to the surface of said nanoparticles by a metal-O-P type covalent bond with the surface of the nanoparticles;
d. depositing (220) the nanoparticles the surface of which is modified by the ligand during step c) in the form of a colloidal suspension on the transparent substrate (200);
**characterised in that** it comprises a step before step d), consisting in:
g. modifying the surface (200) of a transparent substrate (200) by grafting a chemical coupler (260) on said surface;
and **in that** it comprises a step after step d) consisting in:
h. creating a passivation layer (280) above the nanoparticles assembly deposited in step d).

2. Method according to claim 1, **characterised in that** it comprises steps between steps b) and c) consisting in:
e. decanting (115) the aqueous solution;
f. separating and removing too large nanoparticle aggregates (151) from said suspension.

3. Method according to claim 1, **characterised in that** the stabilising agent is polyoxyethelene sorbitan monolaurate.

4. Method according to claim 1, **characterised in that** the ligand is an (aminomethyl)phosphonic acid.

5. Method according to claim 2, **characterised in that** the colloidal suspension obtained in step f) comprises nanoparticle aggregates with a controlled diameter.

6. Method according to claim 5, **characterised in that** the average diameter of the aggregates is of the order of 100 nm (100 x 10⁻⁹ metres) .

7. Method according to claim 1, **characterised in that** the chemical coupler (260) deposited on the surface of the substrate (200) during step g) is deposited according to a defined geometric pattern.

8. Method according to claim 1, **characterised in that** the passivation layer (280) is made of silicon dioxide (SiO₂) .

9. Method according to claim 1, **characterised in that** the passivation layer (280) is made of silicon nitride (Si₃N₄).

10. Method according to claim 1, **characterised in that** the passivation layer (280) is made of a polyimide.

11. Method according to claim 1, **characterised in that** it comprises a step before step h) consisting in:
i. creating (230) a network of electrodes (271, 272) on the nanoparticles assembly.

12. Method according to claim 1, **characterised in that** the colloidal suspension is deposited on the surface of the substrate during step d) by a capillary/convective deposition method.

13. Method according to claim 7, **characterised in that** the colloidal suspension is deposited during step d) by immersion of the substrate in said suspension and that it comprises a step after step d) consisting in:
i. rinsing the substrate (200) with a solvent capable of eliminating nanoparticles that are not bonded by the chemical coupler (260)

14. Method according to claim 7, **characterised in that** step d) comprises steps consisting in:
di. depositing (710) a drop (750) of a colloidal suspension comprising nanoparticles (150) on the surface of the substrate (200);
dii. evaporating (730) said drop (750).

15. Method according to claim 14, **characterised in that** the evaporation step (730) is made by heating the substrate (200) .

16. Transparent touch surface (300), **characterised in that** it comprises a strain gauge (310) comprising a nanoparticles assembly obtained using the method according to claim 1.

17. Touch surface (300) according to claim 16, **characterised in that** it comprises a substrate composed of poly(ethylene terephthalate.

18. Touch surface (300) according to claim 16, **characterised in that** it comprises a substrate composed of silicon dioxide.

19. Touch surface according to claim 16, obtained by a method according to claim 12, **characterised in that** the strain gauge comprises a network of electrodes comprising two sets of comb-shaped electrodes (571, 572), the teeth (5710, 5720) of which are nested.
